# EUROPÄISCHE PATENTSCHRIFT

(11) **EP 0 926 368 B1**
(45) Veröffentlichungstag und Bekanntmachung des Hinweises auf die Patenterteilung: **14.07.2004**
(21) Anmeldenummer: 98123892.6
(22) Anmeldetag: 16.12.1998
(51) Int. Cl.: F16C 33/30, F16C 19/52, F16C 23/08

(54) **Kugellager für hohe Drehzahlen**
Rolling bearing for high rotational speeds
Roulement pour vitesses de rotation élevées

(30) Priorität: 20.12.1997 DE 19757027
(43) Veröffentlichungstag der Anmeldung: 30.06.1999
(73) Patentinhaber: FAG Kugelfischer AG, 97419 Schweinfurt (DE)
(72) Erfinder: Bayer, Oswald, 97491 Aidhausen (DE)

(56) Entgegenhaltungen:
- DE-A- 19 611 723
- DE-A- 19 729 450
- US-A- 5 112 146
- US-A- 5 522 667
- US-A- 5 605 401
- US-A- 5 725 688
- PATENT ABSTRACTS OF JAPAN vol. 017, no. 407 (M-1454), 29. Juli 1993 (1993-07-29) & JP 05 079514 A (HITACHI LTD), 30. März 1993 (1993-03-30)

## Beschreibung

Die Erfindung bezieht sich auf ein Kugellager nach dem Oberbegriff des Anspruchs 1 (siehe EP-B- 342 172).

Maßnahmen, die Kugellager für hohe Drehzahlen geeignet machen, sind schon viele vorgeschlagen worden. Allgemein bekannt ist dazu die Verwendung von Hohlkuglen oder Keramikkugeln, siehe US-A-5 605 401. Wenn man ein so ausgestattetes Lager als Loslager verwenden will, wird es beispielsweise aus der EP-PS 342 172 nahegelegt, Kugellager zu verwenden, deren eine Lauffläche eben ausgestaltet ist. Im Bereich der schulterfreien ebenen Laufflächen kann dann eine Axialverschiebung problemlos stattfinden. In vielen Anwendungsfällen sind diese Maßnahmen aber noch nicht ausreichend. Insbesondere kann es wegen der Punktberührung zwischen den Kugeln und der ebenen Lauffläche zu einem Verschleiß an diesen Teilen kommen. Diese Gefahr wird noch erhöht, wenn nicht die für hohe Drehzahlen richtige Vorspannung bzw. Radialluft vorgesehen wird. Bei zu hoher Vorspannung wird nämlich noch die Reibung und damit die Lagertemperatur unzulässig erhöht. Loslager bei hohen Drehzahlen werden vor allem in Motorspindeln benötigt.

Bisher wurde die Aufgabe durch die Verwendung von Spindellagern, die gegenüber einem Gehäuse axial beweglich eingebaut sind gelöst. Nachteil dieser Lösung ist, daß bei einem engen Spiel durch Betriebsveränderungen die Verschiebbarkeit nicht mehr gewährleistet ist oder hohe Verschiebekräfte benötigt werden. Dieser Nachteil wird teilweise durch spezielle Vorrichtungen z. B. Linearlager mit hohem Kostenaufwand gelöst. Bei Verwendung von Zylinderrollenlagern wird die Drehzahl eingeschränkt.

Es ist daher Aufgabe der Erfindung ein Kugellager vorzuschlagen, das diese Nachteile nicht aufweist und bei sehr hoher Drehzahl (z. B. n x d ₘ > 10 ⁶) auch beim Loslager mit Punktberührung ein verschleißfreies und belastungsmäßig optimales Lager ergibt.

Die Lösung dieser Aufgabe ist im kennzeichnenden Teil des Anspruchs 1 angegeben. Die Ansprüche 2 bis 5 enthalten bevorzugte Ausführungen.

Durch die Verwendung von Keramik für die Kugeln und X 30 Cr Mo N 15 1 für die Laufringe wird zwar bereits ein Lager mit höherer Qualität erreicht. Wesentlich ist aber noch die Einstellung der richtigen Lagerluft. Bei sehr hohen Drehzahlen weitet sich nämlich der Innenring auf und erzeugt dann eine Vorspannung, die oft zu groß wird und das Lager zusätzlich belastet. Es hat sich nun herausgestellt, daß diese Verhältnisse nicht eintreten, wenn eine Radialluft gewählt wird, die 0,0005 bis 0,0007 mal Bohrungsdurchmesser des Innenrings beträgt. Dieser Bereich ist deshalb besonders geeignet, weil hiermit sowohl ein ausreichender Sitz des Lagers auf der Welle und im Gehäuse als auch ein günstiges Betriebsspiel erreicht wird.

Die Erfindung wird an Hand von zwei Figuren näher erläutert.
- Figur 1: zeigt ein erfindungsgemäßes Lager im Längsteilschnitt
- Figur 2: zeigt eine Variante zum Lager nach Figur 1.

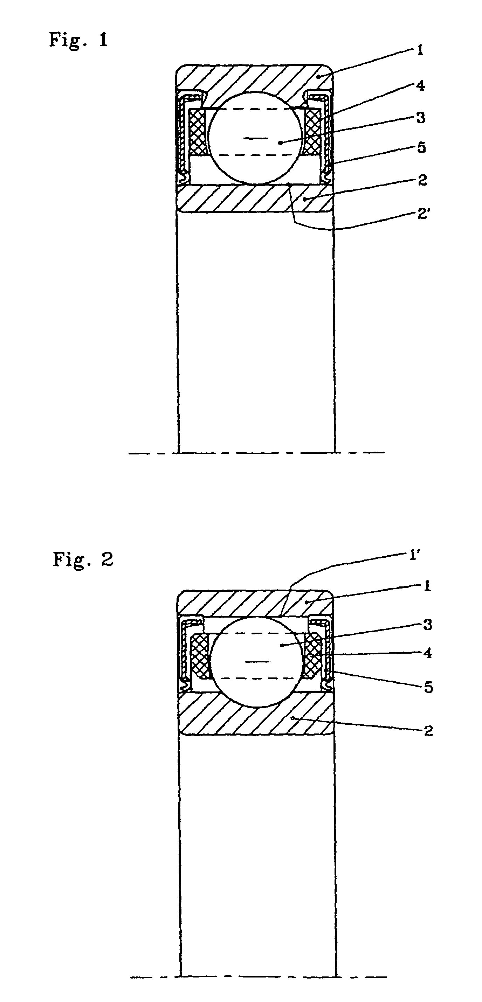

Gemäß Figur 1 besteht das erfindungsgemäße Kugellager aus einem Außenring 1, einem Innenring 2 und den dazwischen angeordneten Kugeln 3, wobei die Kugeln 3 von einem üblichen Käfig 4 geführt und gehalten werden. Beide Laufringe 1 und 2 bestehen aus X 30 Cr Mo N 15-1. Die Kugeln 3 bestehen aus Keramik mit niedrigem Gewicht, weswegen niedrigere Fliehkräfte und damit höhere Drehzahlen erreicht werden können als mit Stahlkugeln. Durch die Einstellung der beanspruchten Radialluft ergibt sich dann ein Kugellager, das die Beanspruchungen bei hoher Drehzahl gut erträgt.

Der Loslagereffekt wird hier dadurch erreicht, daß die Lauffläche 2' des Innenrings 2 aus einer ebenen Fläche besteht. Gemäß Figur 2 wird die Loslagerwirkung durch eine ebene Lauffläche 1' am Außenring 1 erreicht. Das Lager entspricht im übrigen dem aus Figur 1.

Da es manchmal nötig ist, bei einem Serienlager nachträglich noch Anpassungen an die Umgebungsteile des Lagers vorzunehmen, kann man die jeweils ebene Lauffläche 1' oder 2' mit einer kegeligen Gestalt versehen und/oder die Bohrung des Innenrings 2 kegelig ausbilden. In beiden Fällen kann durch axiale Verschiebung des jeweiligen Laufrings eine Reduzierung der Radialluft erreicht werden. Im letzteren Fall muß auch die Sitzfläche des Laufrings kegelig ausgebildet sein.

Durch die geringfügig konvexe Profilierung der ebenen Laufbahn wird die beim Loslager oft eintretende Axialverschiebung des jeweiligen Laufrings nicht behindert.

## Patentansprüche

1. Kugellager für hohe Drehzahlen bestehend aus einem Laufring mit Schultern und einem zweiten Laufring mit einer im Längsschnitt ebenen Lauffläche, **dadurch gekennzeichnet, daß**
a) die Kugeln (3) aus Keramik bestehen
b) die Laufringe (1, 2) aus dem Werkstoff X30CrMoN15-1 hergestellt sind
c) die Radialluft des Lagers in einem Bereich liegt, der 0,0005 bis 0,0007 mal Bohrungsdurchmesser des Innenrings (2) beträgt.

2. Kugellager nach Anspruch 1, **dadurch gekennzeichnet, daß** die ebene Lauffläche (1', 2') eine kegelige Gestalt, vorzugsweise mit 2° Neigung besitzt.

3. Kugellager nach Anspruch 1 oder 2, **dadurch gekennzeichnet, daß** die Bohrung des Innenrings (2) kegelig ausgebildet ist.

4. Kugellager nach Anspruch 1, **dadurch gekennzeichnet, daß** die ebene Laufbahn gegenüber den Kugeln eine geringfügig konvexes Profil aufweist.

5. Kugellager nach Anspruch 1, 2, 3 oder 4, **dadurch gekennzeichnet, daß** das Lager auf einer oder beiden Seiten mit Deck- oder Dichtscheiben (5) versehen ist.

## Claims

1. A ball bearing for high rotational speeds, comprising a raceway with shoulders and a second raceway with a running surface, which is planar in longitudinal section, **characterised in that**
a) the balls (3) comprise ceramics
b) the raceways (1, 2) are produced from the material X 30 Cr Mo N 15-1
c) the radial clearance of the bearing is in a range which is 0.0005 to 0.0007 times the bore diameter of the inner raceway (2).

2. A ball bearing according to claim 1, **characterised in that** the planar running surface (1', 2') has a conical design, preferably with a 2° inclination.

3. A ball bearing according to claim 1 or 2, **characterised in that** the bore of the inner raceway (2) is conical in design.

4. A ball bearing according to claim 1, **characterised in that** the planar running track has a slightly convex profile relative to the balls.

5. A ball bearing according to claim 1, 2, 3 or 4, **characterised in that** the bearing is provided on one or both sides with covering or sealing washers (5).

## Revendications

1. Roulement à billes pour vitesses de rotation élevées, constitué d'une bague de roulement comportant des épaulements et d'une deuxième bague de roulement comportant, en coupe longitudinale, des surfaces de roulement planes, **caractérisé en ce que**
a) les billes (3) sont constituées de céramique,
b) les bagues de roulement (1), 2) sont fabriquées en matériau X30CrMoN15-1,
c) le jeu radial du roulement est compris dans une zone de 0,0005 à 0,0007 fois le diamètre d'alésage de la bague intérieure (2).

2. Roulement à billes suivant la revendication 1, **caractérisé en ce que** la surface de circulation plane (1', 2') présente une structure conique, de préférence avec une inclinaison de 2°.

3. Roulement à billes suivant la revendication 1 ou 2, **caractérisé en ce que** l'alésage de la bague intérieure (2) est conique.

4. Roulement à billes suivant la revendication 1, **caractérisé en ce que** la piste de circulation plane présente, en vis-à-vis des billes, un profil légèrement convexe.

5. Roulement à billes suivant la revendications 1, 2, 3 ou 4, **caractérisé en ce que** le roulement est muni, sur un ou sur les deux côtés, de disques de recouvrement ou d'étanchéité (5).
